# EUROPEAN PATENT SPECIFICATION

(11) **EP 1 930 841 B1**
(45) Date of publication and mention of the grant of the patent: **13.04.2011**
(21) Application number: 07122351.5
(22) Date of filing: 05.12.2007
(51) Int. Cl.: G06K 9/00, G06K 9/62, A63B 69/00

(54) **Method and measuring device for motional performance**
Verfahren und Messvorrichtung für die Bewegungsleistung
Procédé et dispositif de mesure pour performance de mouvement

(30) Priority: 07.12.2006 FI 20065777; 31.05.2007 US 806348
(43) Date of publication of application: 11.06.2008
(73) Proprietor: BASE Vision Oy, 88610 Vuokatti (FI)
(72) Inventor: Karikko, Seppo, 00160 Helsinki (FI); Piirainen, Toni, 88600 Sotkamo (FI); Niskanen, Matti, 90520 Oulu (FI)
(74) Representative: Karppinen, Olavi Arto

(56) References cited:
- GB-A- 2 400 568
- US-A- 5 772 522
- US-A1- 2005 069 853
- BAUER H U ET AL: "Self-organizing maps for the analysis of complex movement patterns" NEURAL PROCESSING LETTERS KLUWER ACADEMIC PUBLISHERS NETHERLANDS, vol. 5, no. 3, June 1997 (1997-06), pages 193-199, XP002473446 ISSN: 1370-4621
- DOSER A B ET AL: "A self organizing map approach to physiological data analysis for enhanced group performance" SIGNALS, SYSTEMS AND COMPUTERS, 2004. CONFERENCE RECORD OF THE THIRTY-EIGHTH ASILOMAR CONFERENCE ON PACIFIC GROVE, CA, USA NOV. 7-10, 2004, PISCATAWAY, NJ, USA,IEEE, 7 November 2004 (2004-11-07), pages 756-759, XP010781041 ISBN: 0-7803-8622-1
- PERL J: "A neural network approach to movement pattern analysis" HUMAN MOVEMENT SCIENCE, NORTH-HOLLAND, ELSEVEIR SCIENCE, AMSTERDAM,, NL, vol. 23, no. 5, November 2004 (2004-11), pages 605-620, XP004678413 ISSN: 0167-9457

## Description

### FIELD

The invention relates to a method and a measuring device for measuring performance including motion.

### BACKGROUND

Body movements and positions may be measured and analysed, for instance, for improving a sporting performance, for learning correct work ergonomics or for rehabilitating physically disabled persons. During sporting performance, for instance, a trainer may only visually observe the performance of an exercising person and tell him or her how to improve or enhance the performance and/or what were the deficiencies in the performance.

The trainer may also resort to various measuring devices, wherewith performance may be recorded on video, for instance. The measuring device may analyse image data and determine from the performance various simple characteristics by means of which the trainer, through his own insight, may try to advise the training person towards better performance. For imaging, the limbs, the body and optional sports equipment may have markers attached thereto, which facilitate detection of movements. A patent document GB 2400568 presents a golf swing diagnosis system. Bauer, H. U et al: Self-Organizing Maps for the Analysis of Complex Movement Patterns, pages 193 - 199, Neural Processing Letters 5,1997 presents a use of self-organizing maps for characterisation of movement patterns. Doser, A. B. et al.: A Self Organizing Map Approach to Physiological Data Analysis for Enhanced Group Performance, pages 756 - 759, IEEE 2004 presents self organizing map used to analyze physiological data. A patent document US 2005/0069853 presents a performance tracking systems and methods.

### BRIEF DESCRIPTION

The object of the invention is to provide an improved method and a measuring device implementing the method. This is achieved by the method for measuring a golf performance including motion defined in claim 1.

The invention also relates to a measuring device for measuring a golf performance including motion as defined in claim 10.

The preferred embodiments of the invention are disclosed in the dependent claims.

Several advantages are achieved by the method and system of the invention. Parameter values may be extracted from the image data without attaching markers to the person performing a movement. No trainer is needed to analyse measuring results or to give advice on how to improve the performance, but the person performing the movement will receive easily understandable feedback on his or her performance immediately after each performance. The feedback is objective, based on the measurement results alone, and not on the trainer's subjective opinion.

### LIST OF DRAWINGS

In the following, the invention will be described in greater detail in connection with preferred embodiments with reference to the attached drawings, in which
Figure 1 shows a measuring arrangement,
Figure 2 shows a self-organizing map,
Figure 3A shows collection of measurement data,
Figure 3B shows a measuring device, and
Figure 4 is a flow chart of the method.

### DESCRIPTION OF EMBODIMENTS

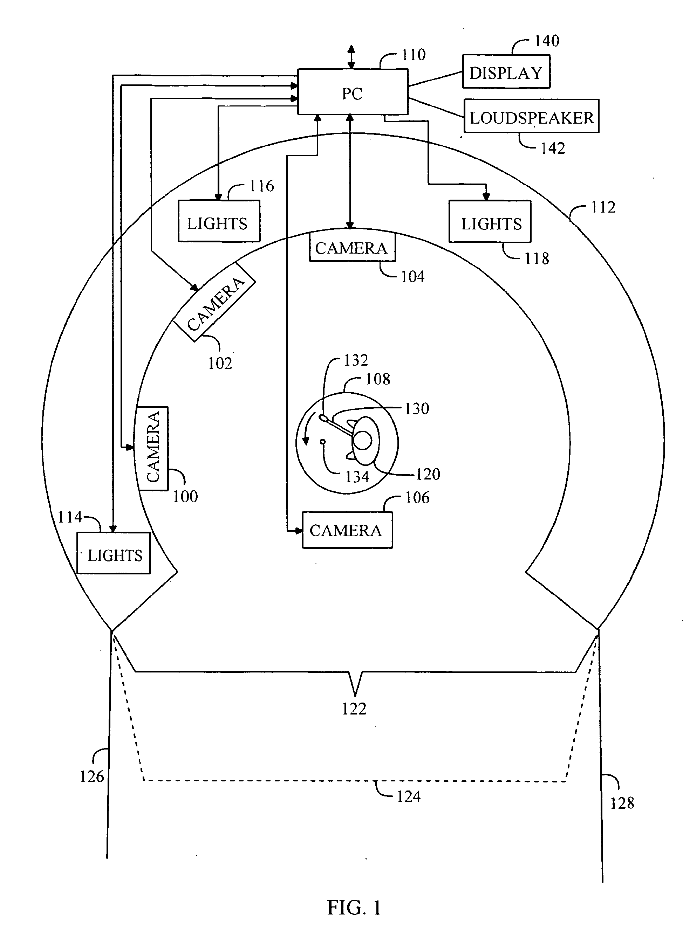

Figure 1 shows a measuring device which may be placed in a desired location indoors or outdoors. The measuring device comprises at least two cameras 100 - 106. The cameras may be video cameras and they may be freely positioned to capture performance that includes motion. For example, the cameras 100 - 104 may be positioned to capture the performance in a horizontal direction, while at least one camera, in this case the camera 106, may capture the performance in a vertical direction. Imaging may also take place obliquely from above.

For instance, when a golf stroke is measured and analysed, the measuring device may be erected in a desired location on the golf course. The measuring device with all the required constructions may be stationary or mobile and allow repeated assembly and disassembly. Thus the cameras 100 - 106 may be mounted on racks (not shown in Figure 1) on various sides of the performance site 108, which is the target for the cameras 100 - 106. The performance site 108 may be, for instance, a conical space with height of 2 to 3 m and radius of 1 to 2 m, for instance. Hence, the person performing a movement need not be accurately on a particular spot during performance. The performance site 108 may also have different shapes and dimensions. The measuring device also comprises an image-processing unit 110, to which signals containing image data from cameras 100-106 will be inputted.

The measuring site may comprise, as additional equipment for the measuring device, a wall 112 and at least one light fitting 114 - 118, even though these are not necessary. In order to provide good illumination and image data of good quality the light fittings 114 - 118 may illuminate the wall 112, wherefrom light and/or other optical radiation reflects diffusely on the person 120 in motion. The wall 112 may comprise an opening 122, through which people may get in and out of the measuring site. An optional sport object may also leave the measuring site through the opening 122 as a result of a movement performed. In addition to the walls 112, the measuring site may also comprise a roof (not shown in Figure 1), a canopy 124 affecting the illumination conditions for changing the illumination and at least one door 126 - 128 for shutting the opening 122 when necessary.

The image-processing unit 110 may apply a clock signal to the cameras 100 - 106 for timing image data. Thus the image data of different cameras may be processed in synchronization. The clock signal may also be applied to light fittings 114 - 118 for controlling the illumination produced thereby to be suitable for imaging.

It is assumed that a golf stroke is to be measured. The measuring may be carried out in the following manner, for instance. The person 120 performing a movement enters the performance site 108. When he or she performs a stroke, the measuring device may detect motion and automatically measure the performance including motion. Alternatively, the measuring device may be automatically set to a measuring state prior to performance, the movement may be performed and the measuring device removed from the measuring state after the performance. Prior to measuring a performance including motion it is possible to enter predetermined data on the performing person and the club into the image-processing unit 110 of the measuring device. These data may include: the physical build of the person (e.g. height and/or length of limbs), quality of club (e.g. length and/or rigidity), quality of sport object (e.g. structure of ball). These data may also be predetermined parameters to be used in measuring.

When a performance including motion can be captured with at least two cameras 100 - 106, the image-processing unit 110 may determine predetermined parameter values on the performance including motion so as to provide measurement data. The parameters may be measured at tens of points of the performing person, the club and the sport object, such as ball, if all these are found on the performance site 108 during the performance. These parameters may include, for instance, positions, velocities and/or acceleration rates of various parts of the striker and the optional club. The maximum measured values of various parts may be compared with one another and/or the values measured on various parts at a given moment may be compared with one another. The parameters may be, for instance: the velocity of the head 132 of the club 130 on impact with the ball 134, the maximum rotational angle of the shoulders, the maximum rotational angle of the hips, the maximum rotational angle of the arms, the maximum speed of the shoulders, the maximum speed of the hips, the maximum speed of the arms, the mutual relations of the speeds of the shoulders, the hips, the arms and the club and changes in the speeds, i.e. accelerations and decelerations, the initial velocity, initial angle and twist of the ball etc. The velocities may be measured as angular velocities (°/s or rad/s) or as linear velocities (m/s). Likewise, accelerations may be measures as angular accelerations (°/s² or rad/s²) or linear accelerations (m/s²). The parameters may also be those derived from other parameters.

In the image-processing unit there is produced a three-dimensional set of points of the silhouettes presenting the object provided by the individual cameras. Various body parts are placed and interconnected in the figure formed by this set of points. Placement and interconnection may be performed by minimizing the differences between a known articulated model of human body and the information produced by the cameras.

The image-processing unit 110 may determine the value of the parameters, for instance, in the following manner. There is taken, for instance, the initial velocity/direction of the golf ball. In video frames it is then possible to search for moving objects by examining temporal changes in image information. By examining a plurality of frames it is possible to distinguish a ball trajectory detected by each camera in the moving objects on the videos. Because the same object is detected by several cameras that are calibrated (location, orientation and internal properties of the camera are known) and synchronized (simultaneous detection), the three-dimensional location of the ball may be determined in relation to the striking point at different time instants. From this it is possible to readily derive the initial velocity of the ball, for instance, as the frame rate of the cameras is known. The initial angle may be determined correspondingly. Prior to the free fly of the ball it is also possible to determine factors affecting it, for instance, by monitoring club head movements.

The image-processing unit 110 measures each performance for the values of the predetermined parameter and analyses each performance by means of the parameters using a projection method with unsupervised learning that can be suitable for visualising. The image-processing unit 110 places each resulting measurement point onto a projection method performance map, where the different performances are mutually proportioned. The performance map used is a self-organizing map of neural computing.

A self-organizing map (SOM) may be used for analyzing and visualizing of large, multidimensional data. The self-organizing map comprises in one or more dimensions mapping units, i.e. neurons, the mutual distance and direction of which depend on the metrics employed. The self-organizing map does not require supervised teaching, but in the course of teaching various neurons get sensitized to various teaching data such that similar data tends to form a cluster on a particular zone on the map.

In general, the self-organizing map is two-dimensional and rectangular, because it permits easy visual presentation on a display and it is comfortable for human comprehension, but the map may also be three-dimensional or toroid, for instance. Data of more dimensions will be quite difficult, if not impossible, to perceive.

The image-processing unit 110 places a measuring point according to the measurement data onto the self-organizing map and as the measurement result will be illustrated it may be presented in relation to at least one neuron of the self-organizing map.

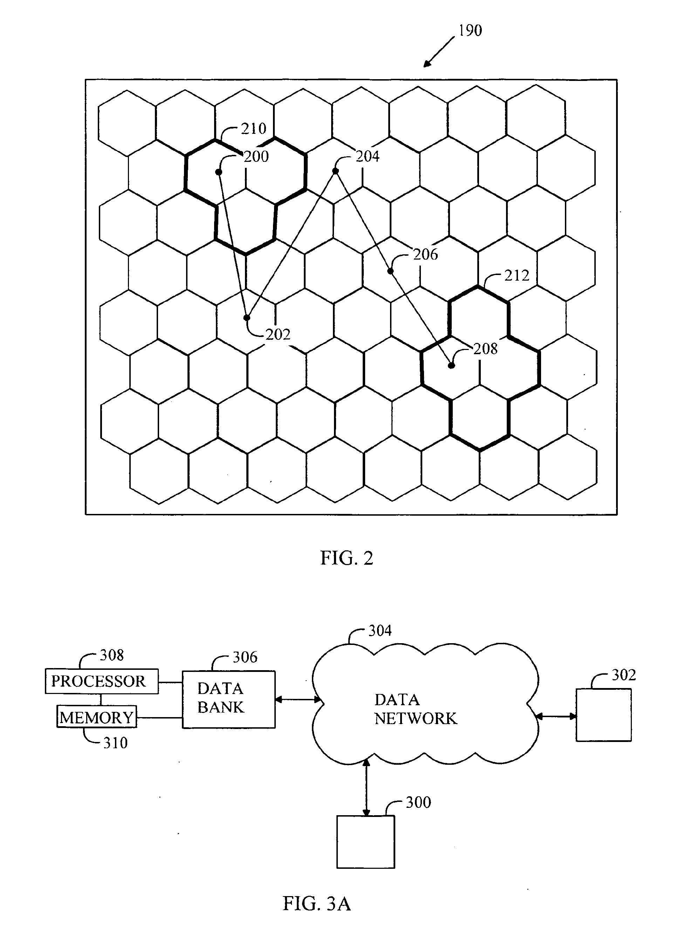

Figure 2 shows a self-organizing map. The map indicates measuring points 200 - 208 of successive measurings in relation to the neurons on the map. Each measuring point 200 - 208 may correspond to one neuron and thus the measuring points 200 - 208 may be marked on the map with accuracy of a neuron. On the map of Figure 2 there are two different clusters 210 and 212, of which the cluster 212 includes neurons of shots to be achieved in training and the cluster 210 includes neurons of shots carried out in the initial stages of training and the measuring point 200 represents the first realized shot.

The first shot 200 was thus performed differently from the desired shot. The image-processing unit 110 may give the player real-time feedback on the shot 200, which feedback indicates the well performed characteristics of the strike and characteristics to be developed to achieve the desired shot. The feedback could indicate, for instance, that the stance, the back swing and the beginning of the stroke up till the moment the hands of the player striking from the right hand side have been lowered on the right hand side thigh, correspond to the characteristics of the desired shot. From here on, to the impact point and after the hit, the relation of the player's hands to the right shoulder deviates considerably from the corresponding characteristics of the desired strike. On the basis of the feedback the player may be confident of the first stages of the strike and concentrate on correcting the deviating characteristics and eventually achieve the desired whole and end up within the cluster of desired shots 212.

In training a golf stroke the desired shot is often a so-called best-suited shot for the game situation, for instance, a low arch, fade-type shot. For instance, on a self-organizing map these shots performed with a club of a particular type by golfers of a certain physical build appear in the same cluster, which may be represented by the cluster 212. The golfer on site receives as feedback a list of characteristics on the performed shots, which list reveals the differences in the characteristics between the realized shot, which appears in cluster 210, for instance, and the desired shot. Transition from the realized shot to the desired shot takes place through repetition while having confidence in the succeeded characteristics and developing others.

On a planar surface, on a Euclidean map two performances, which are close to one another, are similar in many ways. Thus, a characteristic approaching the desired performance is also performance-wise close to the desired performance cluster 212. Correspondingly, a given characteristic in performance that deviates from the desired one is linearly close to the deviating performance cluster 210. Feedback of this kind enables independent training towards a predetermined target.

In a memory of the image-processing unit 110 there may be stored a number of textual announcements on various deviations between the realized and the desired performance. Each deviation may be associated with one verbal announcement that may be presented as alphanumerical characters on a display 140 or as an audible sound through a loudspeaker 142. Correspondingly, textual announcements associated with the desired characteristics of the performance may be stored in the memory of the image-processing unit 110. Thus the performer may be motivated to keep up with the desired characteristics and to favourably develop other characteristics.

A deviation in the first stroke 200 may include, for instance, the fact that the shoulders do not rotate sufficiently and the shoulder to hip relation of the rotation is not correct at the measuring moment according to common knowledge. So, the feedback notifies the golfer of this incorrect rotation. The feedback in text format may be displayed on a screen. In addition, a performance map showing the location and quality of the performance may be displayed to the golfer. For instance, a self-organizing map proportions the performance to the neurons on the map and consequently after each performance the person carrying out a performance including motion may see in real-time on the map, what is desirable and what deviates therefrom in his or her performance.

The performer's shots may also be monitored in real-time shot by shot, for instance, the shot 200 as one neuron or by presenting a set of several shots, such as the combined characteristics of shots 200 - 208, as one neuron. In this context, a delay of a few seconds at most is considered real time. After a plurality of shots it is possible to present a line of individual shots 200 - 208 or of combined characteristics of a plurality of shots, which reveals the development of the shot after the feedback. Achievement of an ideal shot may take thousands of repetitions over hundreds of sessions, during which the shot 200 may develop through the shots 202, 204 and 206 into a shot 208 which will be within the cluster 212 of desired shots.

Figure 3A shows a databank in which the data on performances may be stored. From various performance sites 300 - 302 performance data may be transmitted over a data network 304 to the databank 306. The data network 304 may be a local network for transmitting locally generated data or the Internet, over which performance data from performance sites 300 - 302 in different corners of the world may be transmitted to a global databank 306. Thus, the databank 306 may store millions of performances. Incoming data of the databank 306 may serve as training data of a neural network system that may be arranged in an unsupervised manner. Thus a self-organizing map of the databank constitutes a performance model that becomes more and more accurate as the amount of measurement data increases. From the received data it is also possible to determine, for instance, desirable performances and/or performances deviating in given respects from the desirable performance. For the operations the databank 306 may comprise a processor 308 and memory 310.

All collected data may be placed on the self-organizing map that may be restored as reference on various performance sites 300 - 302. Thus the performances of each performance site 300 - 302 may be placed in an illustrative relation to other measured performances. A specific identifiable neuron may be formed of each performance of each person, whereby the performance may be compared with at least one previous performance of one's own or the person's performance may be compared with that of another person in a commensurate manner.

In the databank 306 it is possible to generate various self-organizing maps according to performers of different levels. Thus, for instance, it is possible to select the best performances of N best performers on the same self-organizing map, where N is an integer larger than two. N may be 100, for instance. For instance in the golf, the best performers refer to players who best carry out such a stroke, i.e. a combination of characteristics, that the path of the ball (sport object) fulfils a predetermined, desired path, for instance as regards the height, the length and a slice off a straight target line. Likewise, it is possible to generate a self-organizing map of 1000 average performers, for instance. When there is a person who is an excellent performer (e.g. a top-level golfer) on a performance site, his performance may be illustrated on a self-organizing map, which is generated using the results of the best performers alone. Correspondingly, when there is a person of average performance on the performance site, his performance may be illustrated on a self-organizing map, which is generated using a set of performers of the corresponding level. This enables a person to be placed onto a map of his or her own scale. Hence, the feedback to be given is also comprehensible to the person concerned and he or she will be better able to strive for improved performance.

It is also possible that the image-processing unit 110 and the databank 306 are located on one performance site and no extensive connections between various measuring points exist. In that case the image-processing unit 110 and the databank 306 may be implemented with one computer that measures, analyses and generates from the measured data a self-organizing map. No matter where the databank 306 is placed, the centralized database enables training and coaching irrespective of the physical location and distance.

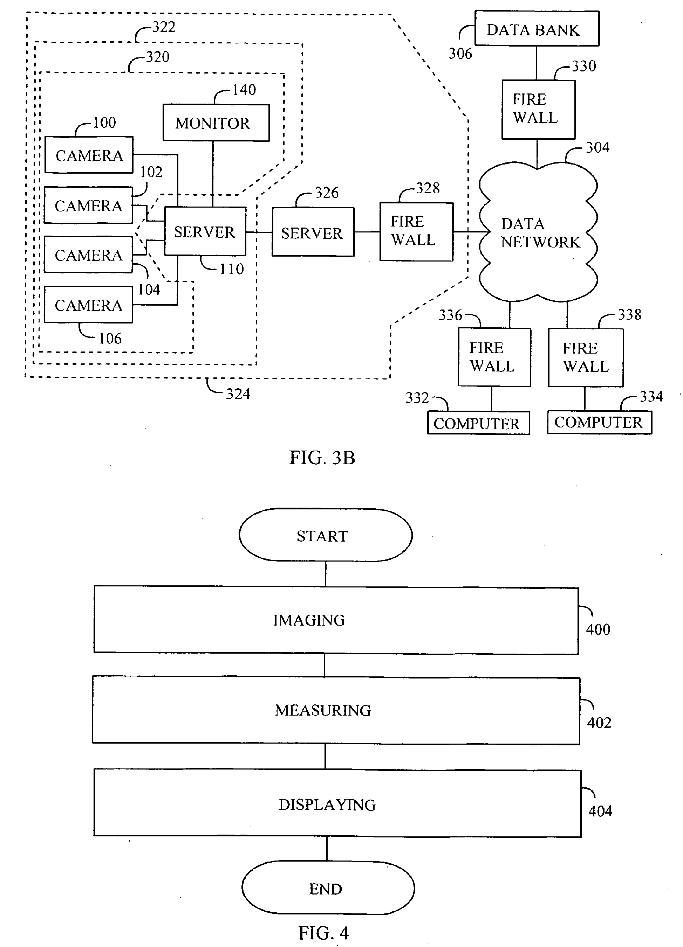

Figure 3B shows the measuring device as an extensive system. A sports club 322 may have one or more tracks/fields 322, such as a golf course, with one or more performance sites 320. Cameras 100 - 106 on each performance site 320 are intended for shooting a performance including motion. The video image generated by the cameras 100 - 106 may be transmitted, for instance, to the performance site image-processing unit 110, which may act as a server on the track, field or course 322. Data associated with the performance including motion and generated by the image-processing unit 110 may be presented on a display 140.

The image-processing unit 110, which acts as the server, comprises a processor and memory and it may be a computer, such as PC, and may communicate over a LAN (Local Area Network) or a WLAN (Wireless LAN) with at least one sports club 324 server 326. Each image-processing unit 110 may transmit data associated with a performance including motion to at least one server 326 of the sports club 324. The server 326 of the sports club 324 may act like the databank 306 with respect to the received and transmitted data irrespective of the connections outside the sports club 324, or in case of a small system with no connections outside the sports club, the server 326 of the sports club 324 may explicitly serve as the databank 306 as described in Figure 3A.

The server 326 of the sports club 324 may, however, communicate outside the sports club 324 through an optional firewall 328 by means of a data network 304. The databank 306, which may serve as a centralized server and which may encompass performance data collected from a number of sports clubs, may communicate through an optional firewall 330 over a data network 304 to the server 326 of each sports club 324. Because data may be transmitted from the server 326 of each sports club 324 to the databank 306, the databank 306 may contain performance data, for instance, covering local area, province, country, continent or even the whole world.

Over the data network 304, through the optional firewalls 336, 338, the measuring device may also comprise one or more computers 332, 334, which may present in real time or near real time a desired performance including motion that is shot with cameras 100 - 106. The presentation may be carried out in the same way as when using the display 140 of the performance site. Each computer 332, 334 may be logged in the system, for instance, controlled by the image-processing unit 110, the server 326 of the sports club 324 or the databank 306. Each user or computer 332, 334 has predefined rights to use the data and the system. Thus, for instance the trainer may configure the image-processing unit 110 to be suitable for a particular performance including motion, which enables better evaluation of performance. For the presentation of the performance each computer 332, 334 may include the same computer program as the image-processing unit 110, which controls the display 140. In addition to the trainer, a supervisor or one interested in the sport concerned may watch a desired performance.

The data network 304 may be the Internet, for instance, and the purpose of the firewall is to filter out interfering data traffic from the measuring device. However, it is not necessary to employ any of the firewalls described.

The measuring device, which may comprise parts 100 - 106, 110, 140, 306, 326, 332, 334, may thus be a local (small) system as shown in Figure 1 or a worldwide (large) system as shown in Figures 3A and 3B or something in between.

Figure 4 is a flow chart of the method. In step 400 the person 100 performing a movement is captured from at least two different directions so as to provide image data on the performance. In step 402 predetermined parameter values are measured from the performance so as to provide measurement data. In step 404 at least one performance based on the measurement data is presented in relation to previously measured performances.

The method may be implemented by means of a processor, a memory and suitable computer program. Alternatively the image-processing unit 110 and the databank 306 may be implemented at least partly as a hardware structure by means of separate logic components or one or more application-specific integrated circuits (ASIC).

The method of Figure 4 may be implemented as a computer program product to be installed for the image-processing unit 110, which encodes a computer process for measuring a performance including motion. The computer program product may be stored on the distribution means of the computer program. The distribution means of the computer program is readable with a computer (image-processing unit) executing the program. The distribution means may be any known means, by which the program is delivered from the manufacturer/seller to the end-user. The distribution means may be, for instance, a medium readable by the image-processing unit, a program recording medium, a memory readable by the image-processing unit, a data signal or a compressed computer program package allocated to the end-user (or image-processing unit) by the manufacturer/seller.

Even though the invention is described above with reference to the examples in the attached drawings, it is apparent that the invention is not restricted thereto, but it may be modified in a variety of ways within the scope of the accompanying claims.

## Claims

1. A method for measuring a golf performance including motion, **characterized by**:
imaging (400) each person (120) performing a movement without markers from at least two different directions so as to provide image data on each performance,
measuring (402) the image data for predetermined parameter values representing each movement for providing measurement data, parameters being positions, velocities and/or acceleration rates of various parts of the person or the club (130), parameter values including at least one of the following: the maximum rotational angle of the shoulders, the maximum rotational angle of the hips, the maximum rotational angle of the arms, the maximum speed of the shoulders, the maximum speed of the hips, the maximum speed of the arms, the mutual relations of the speeds of the shoulders, the hips, the arms and the club and changes in the speeds, accelerations or decelerations, the initial velocity, initial angle or twist of the ball, non-linearly mapping a measuring point (200 to 208) corresponding to the measurement data of the movement to a neuron of a self-organizing map trained as a performance map for proportioning the performance to the neurons on the map, and presenting (404) the performance based on the measured image data in relation to previously measured performances, by displaying the measuring point (200 to 208) in relation to at least one other predetermined neuron representing a desired performance on the self-organizing map, for indicating deviation of the measuring point from the at least one other predetermined neuron.

2. The method of claim 1, comprising imaging a person performing a movement without markers facilitating the image analysis being attached to the person (120).

3. The method of claim 1, comprising transmitting measurement data associated with each performance to a databank (306) for storing.

4. The method of claim 3, comprising generating a performance map in the databank (306) of the measurement data stored in the databank (306) and transmitting the performance map to each performance site so as to serve as reference.

5. The method of claim 4, comprising generating a neuron in the databank (306) of the measurement data associated with each performance and generating of the neurons a self-organizing map that serves as a performance map.

6. The method of claim 3, comprising transmitting the measurement data associated with each performance from various measuring points to the databank (306) utilizing the Internet.

7. The method of claim 1, comprising additionally presenting at least on one computer (332, 334), which communicates with the image-processing unit (110) over a data network (304), at least one performance based on the measurement data in relation to the previously measured performances.

8. The method of claim 7, comprising configuring the image-processing unit (110) to be suitable for a specific performance including motion by means of a computer.

9. The method of claim 1, comprising presenting a verbal comment on the performance, which depends on the relation of the measuring point to at least one other performance.

10. A measuring device for measuring a golf performance including motion, **characterized in that** the measuring device comprising on each performance site
at least two cameras (100 to 106) for imaging each person (120) performing a movement without markers from at least two different directions so as to provide image data on the performance, and
a relating image-processing unit (110) that is configured to measure from each image data the values of predetermined parameters representing motion so as to provide measurement data, parameters being positions, velocities and/or acceleration rates of various parts of the person or the club (130), parameter values including at least one of the following: the maximum rotational angle of the shoulders, the maximum rotational angle of the hips, the maximum rotational angle of the arms, the maximum speed of the shoulders, the maximum speed of the hips, the maximum speed of the arms, the mutual relations of the speeds of the shoulders, the hips, the arms and the club and changes in the speeds, accelerations or decelerations, the initial velocity, initial angle or twist of the ball,
to non-linearly map a measuring point corresponding to the measurement data of the movement onto a self-organizing map trained as a performance map for proportioning the performances to the neurons on the map, where the imageprocessing unit is configured to present the performance based on the measured image data in relation to previously measured performances by displaying the measuring point (200 to 208) in relation to at least one other predetermined neuron representing a desired performance on the self-organizing map, for indicating deviation of the measuring point from the at least one other predetermined neuron.

11. The measuring device of claim 10, wherein the measuring device is configured to capture an image of a person (120) performing a movement without markers facilitating the image analysis being attached to the person (120).

12. The measuring device of claim 10, wherein the measuring device comprises a databank (306) to which an image-processing unit (110) of each performance site is configured to transmit measurement data associated with each performance for storing.

13. The measuring device of claim 11, wherein the databank (306) is configured to generate a performance map from the measurement data stored in the databank (306) and to transfer the performance map to each performance site to serve as reference.

14. The measuring device of claim 13, wherein the databank (306) is configured to form a neuron from the measurement data associated with each performance and to generate of the neurons a self-organizing map which serves as the performance map.

15. The measuring device of claim 11, wherein each image-processing unit (110) is configured to transmit the measurement data associated with each performance to the databank (306) utilizing the Internet.

16. The measuring device of claim 10, wherein the measuring device comprises at least one computer, which is configured to communicate with the image-processing unit (110) over a data network (304) for presenting a desired performance including motion.

17. The measuring device of claim 16, wherein the image-processing unit (110) may be configured suitable for a performance including motion by means of the computer.

18. The measuring device of claim 10, wherein the image-processing unit (110) is configured to present a verbal comment on the performance, which depends on the relation of the measuring point to at least one other performance.

## Patentansprüche

1. Verfahren zum Messen einer Bewegung enthaltenden Golfleistung, **dadurch gekennzeichnet, dass**
jede eine Bewegung ausführende Person (120) ohne Marker aus zumindest zwei verschiedenen Richtungen abgebildet wird (400), um Bilddaten über jede Leistung bereitzustellen,
zum Bereitstellen von Messdaten jede Bewegung repräsentierende vorbestimmte Parameterwerte an den Bilddaten gemessen werden (402), welche Parameter Positionen, Geschwindigkeiten und/oder Beschleunigungsraten von verschiedenen Teilen der Person oder des Schlägers (130) sind und welche Parameterwerte zumindest eines der folgenden beinhalten: den maximalen Drehwinkel der Schultern, den maximalen Drehwinkel der Hüften, den maximalen Drehwinkel der Arme, die maximale Geschwindigkeit der Schultern, die maximale Geschwindigkeit der Hüften, die maximale Geschwindigkeit der Arme, die gegenseitigen Beziehungen der Geschwindigkeiten der Schultern, Hüften, Arme und des Schlägers und Änderungen in den Geschwindigkeiten, Beschleunigungen oder Verzögerungen, die Anfangsgeschwindigkeit, den Anfangswinkel oder den Drall des Balls,
ein den Messdaten der Bewegung entsprechender Messpunkt (200 bis 208) auf ein Neuron einer als Leistungskarte dienenden selbstorganisierenden Karte nichtlinear gemappt wird, um die Leistung an die Neurone auf der Karte anzupassen, und
die Leistung aufgrund der gemessenen Bilddaten in Bezug auf früher gemessene Leistungen dargestellt wird (404), indem der Messpunkt (200 bis 208) in Bezug auf zumindest ein anderes vorbestimmtes Neuron, das eine erwünschte Leistung auf der selbstorganisierenden Karte repräsentiert, angezeigt wird, um eine Abweichung des Messpunkts vom zumindest einen anderen vorbestimmten Neuron anzugeben.

2. Verfahren nach Anspruch 1, bei dem eine eine Bewegung ausführende Person ohne Marker, die die Bildanalyse erleichtern und an der Person (120) befestigt sind, abgebildet wird.

3. Verfahren nach Anspruch 1, bei dem mit jeder Leistung verbundene Messdaten einer Datenbank (306) zur Speicherung übertragen werden.

4. Verfahren nach Anspruch 3, bei dem eine Leistungskarte in der Datenbank (306) der in der Datenbank (306) gespeicherten Messdaten gebildet wird und die Leistungskarte jeder Leistungsstelle als Referenz übertragen wird.

5. Verfahren nach Anspruch 4, bei dem ein Neuron aus den mit jeder Leistung verbundenen Messdaten in der Datenbank (306) gebildet wird und aus den Neuronen eine selbstorganisierende Karte gebildet wird, die als Leistungskarte dient.

6. Verfahren nach Anspruch 3, bei dem die mit jeder Leistung verbundenen Messdaten von verschiedenen Messpunkten der Datenbank (306) per Internet übertragen werden.

7. Verfahren nach Anspruch 1, bei dem zumindest auf einem Computer (332, 334), der mit der Bildverarbeitungseinheit (110) über ein Datennetz (304) kommuniziert, zumindest eine Leistung aufgrund der Messdaten in Bezug auf die früher gemessenen Leistungen zusätzlich dargestellt wird.

8. Verfahren nach Anspruch 7, bei dem die Bildverarbeitungseinheit (110) konfiguriert ist, sich für eine spezifische, Bewegung enthaltende Leistung mit Hilfe eines Computers zu eignen.

9. Verfahren nach Anspruch 1, bei dem eine verbale Bemerkung über die Leistung dargelegt wird, die von der Beziehung des Messpunkts zu zumindest einer anderen Leistung abhängt.

10. Messvorrichtung zum Messen einer Bewegung enthaltenden Golfleistung, **dadurch gekennzeichnet, dass** die Messvorrichtung an jeder Leistungsstelle aufweist:
zumindest zwei Kameras (100 bis 106) zum Abbilden jeder eine Bewegung ausführenden Person (120) ohne Marker aus zumindest zwei verschiedenen Richtungen, um Bilddaten über die Leistung bereitzustellen, und
eine zusammenhängende Bildverarbeitungseinheit (110), die konfiguriert ist, die Werte von die Bewegung repräsentierenden vorbestimmten Parametern an den jeweiligen Bilddaten zum Bereitstellen von Messdaten zu messen, welche Parameter Positionen, Geschwindigkeiten und/oder Beschleunigungsraten von verschiedenen Teilen der Person oder des Schlägers (130) sind und welche Parameterwerte zumindest eines der folgenden beinhalten: den maximalen Drehwinkel der Schultern, den maximalen Drehwinkel der Hüften, den maximalen Drehwinkel der Arme, die maximale Geschwindigkeit der Schultern, die maximale Geschwindigkeit der Hüften, die maximale Geschwindigkeit der Arme, die gegenseitigen Beziehungen der Geschwindigkeiten der Schultern, Hüften, Arme und des Schlägers und Änderungen in den Geschwindigkeiten, Beschleunigungen oder Verzögerungen, die Anfangsgeschwindigkeit, den Anfangswinkel oder den Drall des Balls,
um ein den Messdaten der Bewegung entsprechender Messpunkt auf eine als Leistungskarte dienende selbstorganisierende Karte nichtlinear zu mappen, um die Leistungen an die Neurone auf der Karte anzupassen, wobei die Bildverarbeitungseinheit konfiguriert ist, die Leistung aufgrund der gemessenen Bilddaten in Bezug auf früher gemessene Leistungen darzustellen, indem der Messpunkt (200 bis 208) in Bezug auf zumindest ein anderes vorbestimmtes Neuron, das eine erwünschte Leistung auf der selbstorganisierenden Karte repräsentiert, angezeigt wird, um eine Abweichung des Messpunkts vom zumindest einen anderen vorbestimmten Neuron anzugeben.

11. Messvorrichtung nach Anspruch 10, wobei die Messvorrichtung konfiguriert ist, ein Bild einer eine Bewegung ausführenden Person (120) ohne Marker, die die Bildanalyse erleichtern und an der Person (120) befestigt sind, aufzunehmen.

12. Messvorrichtung nach Anspruch 10, wobei die Messvorrichtung eine Datenbank (306) aufweist, und eine Bildverarbeitungseinheit (110) jeder Leistungsstelle konfiguriert ist, mit jeder Leistung verbundene Messdaten der Datenbank zur Speicherung zu übertragen.

13. Messvorrichtung nach Anspruch 11, wobei die Datenbank (306) konfiguriert ist, eine Leistungskarte aus den in der Datenbank (306) gespeicherten Messdaten zu bilden und die Leistungskarte jeder Leistungsstelle als Referenz zu übertragen.

14. Messvorrichtung nach Anspruch 13, wobei die Datenbank (306) konfiguriert ist, ein Neuron aus den mit jeder Leistung verbundenen Messdaten zu bilden und aus den Neuronen eine selbstorganisierende Karte zu bilden, die als Leistungskarte dient.

15. Messvorrichtung nach Anspruch 11, wobei jede Bildverarbeitungseinheit (110) konfiguriert ist, die mit jeder Leistung verbundenen Messdaten der Datenbank (306) per Internet zu übertragen.

16. Messvorrichtung nach Anspruch 10, wobei die Messvorrichtung zumindest einen Computer aufweist, der konfiguriert ist, mit der Bildverarbeitungseinheit (110) über ein Datennetz (304) zu kommunizieren, um eine erwünschte, Bewegung enthaltende Leistung darzustellen.

17. Messvorrichtung nach Anspruch 16, wobei die Bildverarbeitungseinheit (110) konfiguriert werden kann, sich für eine Bewegung enthaltende Leistung mit Hilfe eines Computers zu eignen.

18. Messvorrichtung nach Anspruch 10, wobei die Bildverarbeitungseinheit (110) konfiguriert ist, eine verbale Bemerkung über die Leistung darzustellen, die von der Beziehung des Messpunkts zu zumindest einer anderen Leistung abhängt.

## Revendications

1. Méthode de mesure d'une performance de golf comprenant un mouvement, **caractérisée par** :
■ la mise en image (400) de chaque personne (120) effectuant un mouvement sans marqueurs à partir d'au moins deux directions différentes de façon à fournir des données d'image sur chaque performance,
■ la mesure (402) des données d'image pour des valeurs de paramètre prédéterminées représentant chaque mouvement pour fournir des données de mesure, les paramètres étant des positions, vitesses et/ou taux d'accélération de diverses parties de la personne ou du club (130), des valeurs de paramètre incluant au moins un élément parmi les suivants : l'angle de rotation maximal des épaules, l'angle de rotation maximal des hanches, l'angle de rotation maximal des bras, la vitesse maximale des épaules, la vitesse maximale des hanches, la vitesse maximale des bras, les relations mutuelles entre les vitesses des épaules, des hanches, des bras et du club et les modifications dans les vitesses, accélérations ou décélérations, la vitesse initiale, l'angle initial ou la torsion de la balle,
■ la cartographie non linéaire d'un point de mesure (200 à 208) correspondant aux données de mesure du mouvement d'un neurone d'une carte auto-organisatrice entraînée comme une carte de performance pour doser la performance des neurones sur la carte, et
■ la présentation (404) de la performance d'après les données d'image mesurées en relation avec des performances mesurées précédemment, en affichant le point de mesure (200 à 208) en relation avec au moins un autre neurone prédéterminé représentant une performance souhaitée sur la carte auto-organisatrice, pour indiquer un écart du point de mesure par rapport à au moins un autre neurone prédéterminé.

2. Méthode selon la revendication 1, comprenant la mise en image d'une personne effectuant un mouvement sans marqueurs facilitant l'analyse d'image jointe à la personne (120).

3. Méthode selon la revendication 1, comprenant la transmission de données de mesure associées à chaque performance à une banque de données (306) pour un stockage.

4. Méthode selon la revendication 3, comprenant la génération d'une carte de performance dans la banque de données (306) des données de mesure stockées dans la banque de données (306) et la transmission de la carte de performance à chaque site de performance de façon à servir de référence.

5. Méthode selon la revendication 4, comprenant la génération d'un neurone dans la banque de données (306) des données de mesure associées à chaque performance et la génération par les neurones d'une carte auto-organisatrice qui sert de carte de performance.

6. Méthode selon la revendication 3, comprenant la transmission des données de mesure associées à chaque performance à partir de divers points de mesure à la banque de données (306) en utilisant Internet.

7. Méthode selon la revendication 1, comprenant additionnellement la présentation d'au moins un ordinateur (332, 334), qui communique avec l'unité de traitement d'image (110) sur un réseau de données (304), au moins une performance étant basée sur les données de mesure en relation avec les performances mesurées précédemment.

8. Méthode selon la revendication 7, comprenant la configuration de l'unité de traitement d'image (110) pour qu'elle soit appropriée pour une performance spécifique incluant le mouvement au moyen d'un ordinateur.

9. Méthode selon la revendication 1, comprenant la présentation d'un commentaire verbal sur la performance, qui dépend de la relation entre le point de mesure et au moins une autre performance.

10. Dispositif de mesure pour mesurer une performance de golf incluant le mouvement, **caractérisé en ce que** le dispositif de mesure comprend sur chaque site de performance
■ au moins deux caméras (100 à 106) pour mettre en image chaque personne (120) effectuant un mouvement sans marqueurs à partir d'au moins deux directions différentes de façon à fournir des données d'image sur la performance, et
■ une unité de traitement d'image associée (110) qui est configurée pour mesurer à partir de chaque donnée d'image les valeurs de paramètres prédéterminés représentant un mouvement de façon à fournir des données de mesure, les paramètres étant des positions, des vitesses et/ou des taux d'accélération de diverses parties de la personne ou du club (130), les valeurs de paramètre incluant au moins un élément parmi les suivants : l'angle de rotation maximal des épaules, l'angle de rotation maximal des hanches, l'angle de rotation maximal des bras, la vitesse maximale des épaules, la vitesse maximale des hanches, la vitesse maximale des bras, les relations mutuelles entre les vitesses des épaules, des hanches, des bras et du club et les modifications dans les vitesses, accélérations ou décélérations, la vitesse initiale, l'angle initial ou la torsion de la balle,
■ pour cartographier de façon non linéaire un point de mesure correspondant aux données de mesure du mouvement sur une carte auto-organisatrice entraînée comme une carte de performance permettant de doser les performances des neurones sur la carte, où l'unité de traitement d'image est configurée pour présenter la performance d'après les données d'image mesurées en relation avec des performances mesurées précédemment, en affichant le point de mesure (200 à 208) en relation avec au moins un autre neurone prédéterminé représentant une performance souhaitée sur la carte auto-organisatrice, pour indiquer un écart entre le point de mesure et le au moins un autre neurone prédéterminé.

11. Dispositif de mesure selon la revendication 10, dans lequel le dispositif de mesure est configuré pour prendre une image d'une personne (120) effectuant un mouvement sans marqueurs facilitant l'analyse d'image jointe à la personne (120).

12. Dispositif de mesure selon la revendication 10, dans lequel le dispositif de mesure comprend une banque de données (306) à laquelle une unité de traitement d'image (110) de chaque site de performance est configurée pour transmettre des données de mesure associées à chaque performance pour un stockage.

13. Dispositif de mesure selon la revendication 11, dans lequel la banque de données (306) est configurée pour générer une carte de performance à partir des données de mesure stockées dans la banque de données (306) et pour transférer la carte de performance vers chaque site de performance pour servir de référence.

14. Dispositif de mesure selon la revendication 13, dans lequel la banque de données (306) est configurée pour former un neurone à partir des données de mesure associées à chaque performance et pour générer les neurones d'une carte auto-organisatrice qui sert de carte de performance.

15. Dispositif de mesure selon la revendication 11, dans lequel chaque unité de traitement d'image (110) est configurée pour transmettre les données de mesure associées à chaque performance à la banque de données (306) à l'aide d'Internet.

16. Dispositif de mesure selon la revendication 10, dans lequel le dispositif de mesure comprend au moins un ordinateur, qui est configuré pour communiquer avec l'unité de traitement d'image (110) sur un réseau de données (304) pour présenter un mouvement incluant une performance souhaitée.

17. Dispositif de mesure selon la revendication 16, dans lequel l'unité de traitement d'image (110) peut être configurée de façon appropriée pour un mouvement incluant une performance au moyen de l'ordinateur.

18. Dispositif de mesure selon la revendication 10, dans lequel l'unité de traitement d'image (110) est configurée pour présenter un commentaire verbal sur la performance, qui dépend de la relation entre le point de mesure et au moins une autre performance.
